# EUROPEAN PATENT APPLICATION

(11) **EP 4 661 227 A1**
(43) Date of publication of application: **10.12.2025**
(21) Application number: 25760210.2
(22) Date of filing: 26.02.2025
(51) Int. Cl.: H02G 5/08

(54) **BUSBAR CONNECTING ASSEMBLY FOR CONNECTING BUSBARS, BUSBAR ASSEMBLY, AND BUSWAY ENCLOSURE ASSEMBLY**

(30) Priority: 29.02.2024 CN 202420389091 U
(71) Applicant: SCHNEIDER ELECTRIC INDUSTRIES SAS, 92500 Rueil-Malmaison (FR)
(72) Inventor: HUANG, Jianliang, Guangzhou, Guangdong 510530 (CN); HUANG, Jianyuan, Guangzhou, Guangdong 510530 (CN); HUANG, Fa, Guangzhou, Guangdong 510530 (CN); LIN, Tianwen, Guangzhou, Guangdong 510530 (CN)
(74) Representative: Manitz Finsterwald Patent- und Rechtsanwaltspartnerschaft mbB
(86) International application number: PCT/CN2025/079343
(87) International publication number: WO 2025/180415

(57) **Abstract**

Embodiments of the present disclosure provide a busbar connection assembly, a busbar assembly and a busbar box assembly for connecting busbars, the busbar connection assembly comprising: a pair of conductive plates adapted to clamp and connect a first busbar and a second busbar separated from each other and extending in a same extending direction, each of the pair of conductive plates comprising: a body; a pair of coupling portions arranged at least at ends of the body in an extending direction, the pair of coupling portions being respectively coupled to the body through solid-liquid coupling or solid-solid coupling by using a same material as surfaces of the connecting portions of the first busbar and the second busbar; and a positioning hole formed in a middle portion of the body in the extending direction; and a locking member coupled in the positioning hole to lock and electrically connect the first busbar and the second busbar by pressing the pair of coupling portions respectively to the surfaces of the connecting portions of the first busbar and the second busbar. Therefore, the contact resistance of the busbar's electrical contact can be reduced, and the stability of electrical contact can be improved.

## Description

### FIELD

Example embodiments of the present disclosure generally relate to the technical field of power transmission and distribution equipment, and in particular, to a busbar connection assembly, a busbar assembly, and a busbar box assembly for connecting busbars.

### BACKGROUND

A busbar duct is a widely used power transmission device, which is mainly used for power distribution in a power system, a factory workshop and the like, that is, to achieve orderly and safe transmission of power. Each busbar duct is joined by a connector.

However, during an operation of the busbar duct and the connector, since contact resistance is large, this may result in an excessively high temperature at a contact region (such as an end of the busbar duct, the connector, the socket connection of a plug-in busbar duct). In other words, an electrical coupling between the conventional busbar duct and the connector may cause the large contact resistance, which not only affects the operation efficiency of the power system, but also constitutes a potential threat to the safety of the power system.

### SUMMARY

An object of the present disclosure is to provide a busbar connection assembly, a busbar assembly, and a busbar box assembly for connecting busbars to at least partially solve the above problems and/or other potential problems existing in the conventional busbar connections.

In a first aspect of the present disclosure, a busbar connection assembly for connecting busbars is provided. The busbar connection assembly includes: a pair of conductive plates adapted to clamp and connect a first busbar and a second busbar separated from each other and extending in a same extending direction, each of the pair of conductive plates including: a body arranged to overlap a connecting portion located at ends of the first busbar and the second busbar adjacent to each other; a pair of coupling portions arranged at least at ends of the body in an extending direction, the pair of coupling portions being respectively coupled to the body through solid-liquid coupling or solid-solid coupling by using a same material as surfaces of the connecting portions of the first busbar and the second busbar; and a positioning hole formed on the body and located in a middle portion of the body in the extending direction; and a locking member coupled in the positioning hole to lock and electrically connect the first busbar and the second busbar by pressing the pair of coupling portions respectively to the surfaces of the connecting portions of the first busbar and the second busbar.

According to embodiments of the present disclosure, by overlapping the body and the connecting portion of the ends of the first busbar and the second busbar, it can be ensured that the body covers the connecting portion to form a strong support base.

Meanwhile, the coupling portions are located at the ends of the body in the extending direction, and the pair of coupling portions are respectively made of the same material as the connecting portion of the first busbar and the second busbar, and are coupled to the body through solid-liquid coupling or solid-solid coupling. Therefore, it can be ensured that a connection with good contact and low resistance is formed between the coupling portion and the surface of the busbar.

By coupling the locking member in the positioning hole, the pair of coupling portions are respectively pressed to the surfaces of the connecting portions of the first busbar and the second busbar, thereby achieving locking and electrical connection of the first busbar and the second busbar. In this way, the contact resistance can be effectively reduced, the electrical transmission performance can be improved, and the temperature of the contact region can be reduced. Other benefits will be described below in connection with corresponding embodiments.

In some embodiments, an extending length of each of the pair of coupling portions in the extending direction is equal to a length of the connecting portion of the first busbar or the second busbar in the extending direction.

In some embodiments, the extending length of the coupling portion in the extending direction of the conductive plate is at least 3 times a sum of thicknesses of the body and the coupling portion.

In some embodiments, a thickness of the coupling portion is not greater than a thickness of the body.

In some embodiments, the conductive plate further includes a plurality of limiting blocks arranged to protrude from the body from a periphery proximate to the positioning hole.

In some embodiments, ends of the pair of conductive plates in the extending direction are chamfered.

In a second aspect of the present disclosure, a busbar assembly is provided. The busbar assembly includes the busbar connection assembly according to the first aspect described above; and a busbar group at least including a first busbar and a second busbar extending in a same extending direction, the first busbar and the second busbar each including a connecting portion and a power transmission portion for power transmission, the connecting portion being formed at ends of the power transmission portions of the first busbar and the second busbar close to each other, wherein the connecting portion is adapted to be clamped between the coupling portions of the conductive plates of the busbar connection assembly to establish an electrical connection between the first busbar and the second busbar.

In some embodiments, the connecting portion is integrally formed at ends of the power transmission portions of the first busbar and the second busbar close to each other by solid-liquid coupling or solid-solid coupling.

In some embodiments, a length of the connecting portion in the extending direction is equal to an extending length of the coupling portion in the extending direction.

In some embodiments, the connecting portion is arranged on an entire side of the first busbar or the second busbar close to the conductive plate to electrically couple the conductive plate.

In a third aspect of the present disclosure, a busbar box assembly is provided. The busbar box assembly includes a busbar box; and a plurality of busbar assemblies according to the second aspect arranged in the busbar box.

In some embodiments, the busbar box assembly further includes an insulating separator arranged at least between the conductive plates of busbar connection assemblies of the plurality of busbar assemblies.

It should be understood that the content described in this content section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 is a schematic structural diagram of a busbar connection assembly locking busbars according to some embodiments of the present disclosure;
FIG. 2 is a schematic structural diagram of a busbar connection assembly detached from busbars according to some embodiments of the present disclosure;
FIG. 3 is a cross-sectional diagram of a busbar connection assembly detached from busbars according to some embodiments of the present disclosure;
FIG. 4 is a schematic structural diagram in which a pair of busbars are inserted between a pair of conductive plates according to some embodiments of the present disclosure;
FIG. 5 is a schematic structural diagram of a conductive plate according to some embodiments of the present disclosure; and
FIG. 6 and FIG. 7 are schematic structural diagrams of a busbar according to some embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

As mentioned briefly above, the contact resistance of the contact region is large, resulting in a problem of excessively high temperature. In particular, the conventional busbar ducts (hereinafter also referred to as busbar box assemblies), in a low-voltage power transmission and distribution industry, interior of the busbar ducts are usually divided into a plurality of independent regions or bars for transmitting power of different phases. Each busbar duct is joined by a connector (hereinafter also referred to as a busbar connection assembly).

However, during operation of the busbar duct and the connector, due to continuous current passing, the large contact resistance is generated in the contact region, thereby resulting in excessively high temperature in the contact region of the busbar duct and the connector. For example, for an aluminum busbar in the conventional busbar duct, there are generally two common types of contact regions. One is to use tinned aluminum conductor and the other is to weld an additional contact member at the end of the aluminum conductor.

For tinned aluminum conductor, due to the softness of tin, after multiple plugging and unplugging operations, tin layer is easy to fall off, resulting in the direct electrical contact of aluminum-aluminum in the contact region after the tin layer falls off. Because the contact resistance of aluminum is high, in this case, the contact resistance of the contact region can be greatly increased, and the temperature at the seal will also rise accordingly, which negatively affects the normal operation and service life of the busbar duct.

The other situation is to weld the additional contact member, such as a copper contact member, at the end of the aluminum conductor to form the aluminum busbar. During the operation of the busbar duct and the connector, galvanic corrosion occurs due to contact between copper and aluminum. This means that a contact surface of the contact member and the aluminum conductor can only be the aluminum conductor, which results in a very large contact resistance between the contact member and the aluminum conductor. Since spot welding is generally used, the contact area between the two for conduction is relatively small, which is not conducive to electrical contact and increases the contact resistance. As a result, the temperature of the contact region will also increase accordingly, which seriously affects the normal operation and service life of the busbar duct.

The temperature increase of the contact region will have multiple impacts on the busbar duct and the entire power transmission and distribution system. First, the high temperature promotes an increase of contact impedance, resulting in increased power consumption, affecting the effective utilization of electrical energy, and affecting the economy of the power system. Secondly, the excessively high temperature may also cause thermal stress on the busbar duct itself and its peripheral structure, which may result in aging of the busbar duct, decreasing of durability, even possibly cause failure or even fire of the power distribution line, affect safe operation of the power system, thereby affecting the stability and reliability of the whole system. In addition, due to the existence of the contact resistance, the transmission of electrical energy is affected and the power loss will increase, thus affecting the efficiency of the power system.

In order to solve or at least partially solve the above problems or other potential problems of the busbar connection in the conventional solution, embodiments of the present disclosure provide a busbar connection assembly, a busbar assembly and a busbar box assembly solution for connecting busbars. According to the scheme of embodiments of the present disclosure, the busbar connection assembly comprises a pair of conductive plates and a locking member, which are used for clamping and connecting a first busbar and a second busbar separated from each other and extending in a same extending direction.

Further, each conductive plate includes three parts, namely a body, a pair of coupling portions, and a positioning hole. Further, the body overlaps a connecting portion of ends of the first busbar and the second busbar bar, it can be ensured that the body covers the connecting portion to form a strong support base. The coupling portion is located at ends of the body in an extending direction of the body. The coupling portion is made of a same material as the connecting portion of the first busbar and the second busbar, and is coupled to the body by solid-liquid coupling or solid-solid coupling. Therefore, it can be ensured that a connection with good contact that meets low-resistance requirements is formed between the coupling portion and the surface of the busbar. Meanwhile, the positioning hole is formed in the body and located in the middle portion of the body in the extending direction. The locking member is coupled in the positioning hole, by pressing the pair of coupling portions respectively onto the surfaces of the connecting portions of the first busbar and the second busbar, locking and electrical connection of the first busbar and the second busbar can be achieved.

In this way, the contact resistance can be avoided or reduced, the excessively high temperature can be effectively prevented, the service life of the busbar duct is prolonged, the stability and reliability of the system are guaranteed, and meanwhile, the overall efficiency of the power system can be improved.

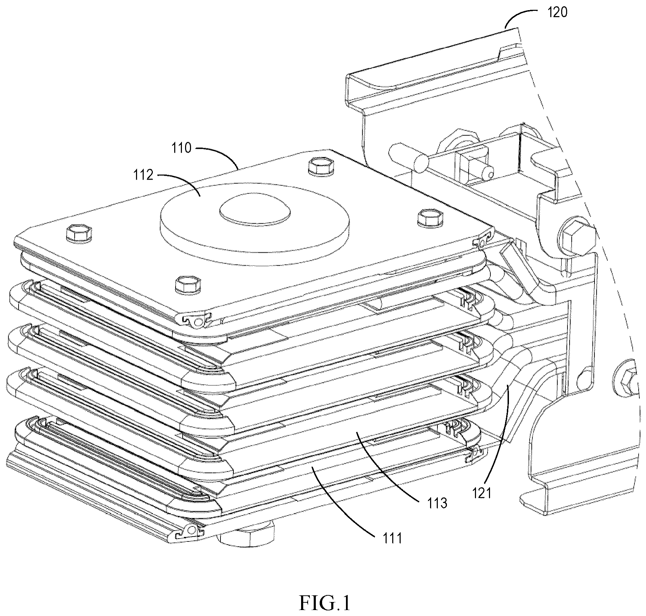

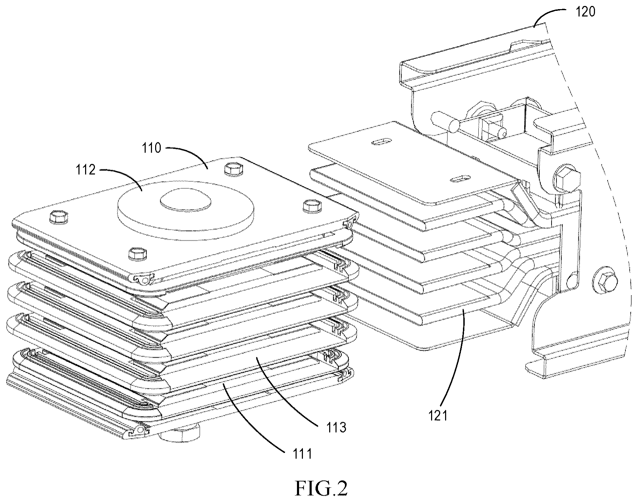

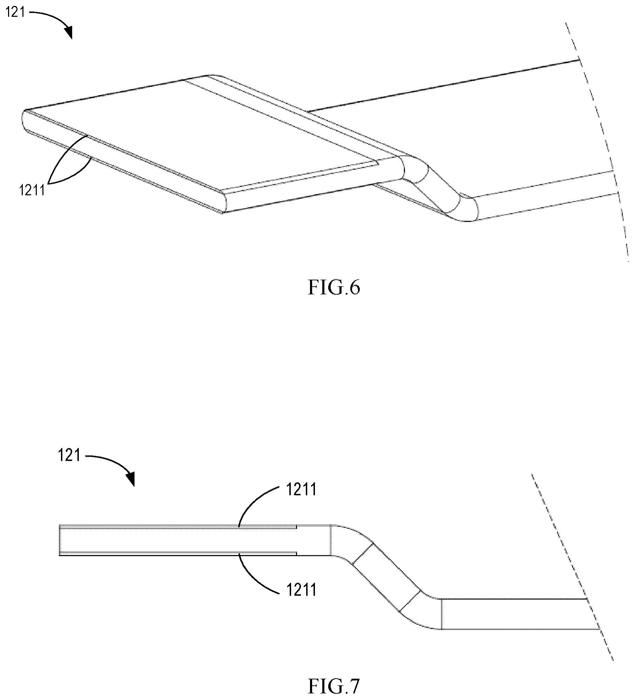

Example structures of connecting the busbar box assembly (i.e., the busbar duct described above) through a busbar connection assembly 110 (i.e., the connector described above) will be described below in conjunction with FIGS. 1-7. In the power transmission and distribution industry, the busbar connection assembly 110 is a component for connecting two busbar ducts.

Specifically, the busbar connection assembly 110 is made of a metal copper or copper-aluminum composite material or any other suitable material, and has a left end and a right end in an extending direction, and may respectively contact ends of two busbars. Specifically, a first busbar in the two busbars to be connected (for example, extending in a same direction) is inserted into one end of the busbar connection assembly 110 to ensure good electrical contact, and then one end of a second busbar is also connected to the other end of the busbar connection assembly 110. This can reliably electrically connect the two busbars. In this way, the electrical contact established by the busbar connection assembly 110 between the busbars can be ensured, and the stability of the physical connection can also be ensured, so as to ensure the safety and efficiency of the power system.

Hereinafter, the concept of the present disclosure will be described mainly in the case where the conductive plate 111 and the busbar are made of the copper-aluminum composite material, and it should be understood that the concept is also applicable to other similar cases, such as busbars and conductive plates of the connector used in busbar ducts, which will not be separately described hereinafter. For ease of description, the busbar box assembly in embodiments of the present disclosure includes a plurality of busbar assemblies, which will be further described below.

As shown in FIGS. 1 to 7, a busbar box assembly according to embodiments of the present disclosure generally includes a busbar box 120 and a plurality of busbar assemblies.

Specifically, the busbar box 120 is a strong and protective container, generally made of a fire-resistant and well-insulating material, such as plastic or metal. Size and shape of the busbar box 120 are determined by the number and layout of installed busbars. The busbar box 120 can adapt to various environmental conditions and has sufficient strength to protect the internal electrical devices from the environment.

Then, the plurality of busbar assemblies are arranged inside the busbar box 120. Each busbar assembly is fixed inside the busbar box 120 to ensure that it can remain stable during a process of current transmission. At the same time, the busbar box 120 can be easily opened to inspect and maintain the busbar assemblies.

Therefore, the busbar box assembly can protect the busbar assembly and ensure stable transmission of current, thereby ensuring stable operation of the power system. The busbar box assembly may accommodate a plurality of busbar assemblies. Each busbar assembly may correspond to one phase in a circuit.

The busbar assembly and the busbar connection assembly 110 will be further described below in conjunction with FIGS. 1-7. A busbar assembly according to embodiments of the present disclosure generally includes a busbar connection assembly 110 and a busbar group. The busbar group may include at least two busbars, every two busbars establish an electrical connection by the connecting assembly 110.

The following will mainly describe how a pair of busbars in the busbar group are electrically connected by the busbar connection assembly. Hereinafter, for ease of discussion, the pair of busbars to be connected includes a first busbar 121 and a second busbar 122. The first busbar 121 and the second busbar 122 respectively includes a connecting portion 1211 and a power transmission portion for transmitting power. The power transmission portion is a main component of the first busbar 121 or the second busbar 122, and its extending length is substantially an extending length of the first busbar 121 or the second busbar 122. The connecting portion 1211 and the power transmission portion may be integrally formed by using a same material. In some alternative embodiments, the power transmission portion may also be made of a first material such as aluminum or aluminum alloy, and the connecting portion 1211 is made of a second material such as copper or copper alloy. The concept of the present disclosure will be described below mainly by using an example of the connecting portion 1211 and the power transmission portion being made of different materials. It should be understood that other cases are similar, and will not be separately described hereinafter.

In such embodiments, the connecting portion 1211 is integrally formed at ends of the first busbar 121 and the second busbar 122 close to each other through solid-liquid coupling or solid-solid coupling. This coupling ensures the strength and conductivity of the busbar and also makes the connection between the busbars more stable and safe. Additionally, the busbar assemblies are usually arranged in a parallel or staggered arrangement, depending on the complexity of the power system and the required current distribution approach.

It should be noted here that the solid-liquid coupling is achieved by solid-liquid casting-rolling composite forming technique. It is a forming technique for continuous casting rolling by adopting semi-solid metal. It aims to achieve organic fusion of solid state and liquid metal to improve the overall performance of the material, including mechanical properties, durability and stability.

Specifically, the metal is cast in semi-solid state, which is different from the traditional all-solid state or all-liquid state casting, in this state the metal has fluidity and also has a certain shape retention capability. Then, the semi-solid state metal is directly fed into continuous rolling, and the metal material achieves the ideal mechanical property and microstructure through high-precision pressure control and temperature adjustment.

Compared with the traditional forming method, a solidification process of the solid-liquid casting-rolling composite forming technique is easier to control, and the formability and the performance of the material can be effectively improved. Secondly, a direct casting-rolling method can reduce process steps, improve production efficiency, and reduce production cost. Finally, this technique can usually guide the transition of an acicular structure, thereby increasing strength and toughness of the metallic material.

For example, a copper-aluminum eutectic strip is developed on the basis of a traditional aluminum strip casting rolling, a unique solid-liquid casting-rolling composite forming technique is adopted, during a process of converting aluminum liquid from a liquid phase to a solid phase, a solid copper strip is synchronously guided, atoms of two metal interfaces are subjected to interdiffusion and crystallization through high-temperature and high-pressure rolling of a casting roller to form a unique copper-aluminum eutectic composite plate, compared with a traditional copper-aluminum composite plate produced by a traditional cold-rolling composite method, a hot-rolling composite method and an explosive composite method, it has a subversive upgrade in properties such as peel strength, load flow, conductivity, tensile strength, shearing strength and the like, and is mainly used for a battery connector busbar of a new energy vehicle.

In addition, the solid-solid coupling technique is also a composite forming technique, which is mainly applicable to two or more materials with different characteristics. This technique is generally used to tightly bond these different materials together to form a complex that has both the advantages of the various components and avoids or suppresses their disadvantages.

Therefore, the connection between the busbars is as stable as a whole, and the current can flow seamlessly from the first busbar 121 to the second busbar 122 through the busbar connection assembly 110, thereby achieving power transmission and distribution and power supply of the equipment. In addition, this connection method also ensures the safety and reliability of the connection, and enables a busbar system to maintain good performance in any case, thereby achieving stable and safe power transmission and distribution functions.

In some embodiments, during constructing a stable, efficient busbar system, the connecting portion 1211 is located on the busbar and is a portion of the busbar for the purpose of engaging with the conductive plate 111 of the busbar connection assembly 110. The coupling portion 1111 of the busbar connection assembly 110, which will be described in detail below, is a portion of the conductive plate 111 for safely and effectively accommodating and supporting the connecting portion 1211 of the busbar.

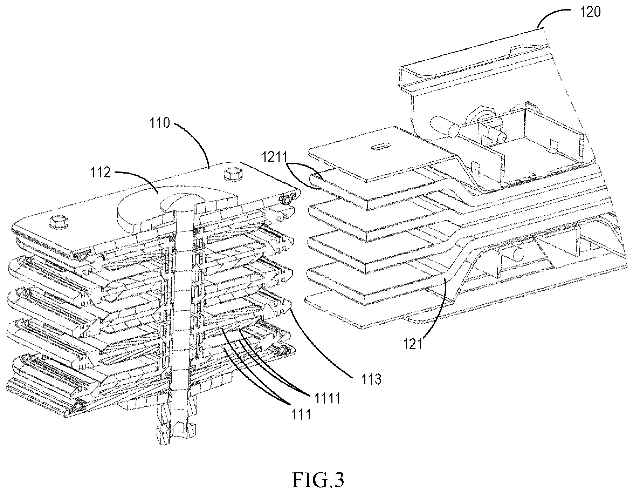

A busbar connection assembly 110 according to embodiments of the present disclosure will be described below with reference to FIG. 3 to FIG. 5. The busbar connection assembly 110 according to embodiments of the present disclosure generally includes a pair of conductive plates 111 and a locking member 112. Specifically, the locking member 112 enables the pair of conductive plates 111 to clamp and connect the busbar. As described above, the connecting portion 1211 of the busbars disposed on each of the first busbar 121 and the second busbar 122 can be accommodated and tightly connected. The first busbar 121 and the second busbar 122 may extend in a same extending direction, thereby facilitating installation and maintenance of the conductive plate 111.

In addition, the locking member 112 fixes and strengthens the connection between the busbars by locking the pair of conductive plates 111. That is, the pair of conductive plates 111 can be respectively and tightly pressed to the surfaces of the connecting portions 1211 of the first busbar 121 and the second busbar 122 through the locking member 112. In this way, the first busbar 121 and the second busbar 122 can be tightly locked together, and meanwhile, the stable and reliable electrical connection can be achieved.

From the above description, it can be seen that the busbar connection assembly 110 is for the busbar system to have stable and efficient electrical transmission performance. The cooperation of the conductive plate 111 and the locking member 112 not only ensures that they can tightly connect the first busbar 121 and the second busbar 122 together, but also ensures smooth transmission of electrical energy during this process, and fully meets the high requirements about safety and stability in the electric power facility.

Further, each of the pair of conductive plates 111 generally includes a body 1112, a pair of coupling portions 1111, and a positioning hole 1113. For example, the body 1112 is an aluminum conductor, and the coupling portion 1111 is a copper conductor. These parts will be described in detail below.

Specifically, the body 1112 of the conductive plate 111 may overlap the connecting portion 1211 located at ends of the first busbar 121 and the second busbar 122 adjacent to each other. This can ensure that during a current transmission process, the contact area is sufficient, the conductivity is improved, and meanwhile, the tight connection between the conductive plate 111 and the busbar is achieved.

A pair of coupling portions 1111 are arranged at ends of the body 1112 in an extending direction and are made of the same material as surfaces of the connecting portions 1211 of the first busbar 121 and the second busbar 122. The coupling portions 1111 are connected to the body 1112 through solid-liquid coupling or solid-solid coupling. Their contact with the busbar further enhances the electrical connection capability between the conductive plate 111 and the busbar. The electrical connection between the first busbar 121 and the second busbar 122 is established by clamping the connection portion 1211 between the coupling portions 1111 of the conductive plates 111 of the busbar connection assembly 110.

Further, the positioning hole 1113 is a portion formed on the body 1112, and is located in a middle portion of the body 1112 in the extending direction. The positioning hole 1113 allows the locking member 112 to pass through and be fixed to enhance the structural and electrical connection of the conductive plate 111 and the busbar, thereby effectively performing stable power transmission.

In some embodiments, the connecting portion 1211 is arranged on an entire side of the first busbar 121 or the second busbar 122 close to the conductive plate 111. The purpose of this is to achieve omni-directional electrical coupling, that is, an entire contact surface of the connecting portion 1211 and the conductive plate 111 can transmit current. This ensures higher conductivity because it can provide larger contact area to reduce the contact resistance and provide a stable and efficient current transmission path.

In addition, since the connecting portion 1211 covers the entire side surface of the busbar close to the conductive plate 111, it actually provides a layer of protection for the conductive portion of the busbar, thereby avoiding wear and aging in long-term use.

In summary, the connecting portion 1211 is arranged on the entire side of the first busbar 121 or the second busbar 122 close to the conductive plate 111, which not only improves the operation efficiency of the busbar system, but also increases the service life and reliability of the busbar.

In actual use, during current flowing through the busbar, it passes through the connecting portion 1211, is transmitted to the busbar connecting assembly 110 through the connecting portion 1211, and then flows to other busbars through the busbar connecting assembly 110. Since the connecting portion 1211 is just arranged close to the entire side of the conductive plate 111, this ensures that the conductive plate 111 can receive and transmit the current from the busbar evenly, thereby avoiding the problem of heat concentration and overcurrent.

In some embodiments, the pair of coupling portions 1111 of the conductive plate 111 can effectively achieve an electrical connection between the conductive plate 111 and the busbar. An extending length of each coupling portion 1111 in the extending direction is equal to a length of the connecting portion 1211 of the first busbar 121 or the second busbar 122 in the extending direction.

In particular, the equal extending length means the larger contact area, which will greatly improve the electrical conduction efficiency, as resistance tends to decrease as the contact area increases. Secondly, the equal extending length helps ensure the tight contact between the coupling portion 1111 and the busbar connecting portion 1211, which can effectively improve stability of the system and reduce voltage fluctuations due to poor contact.

In addition, since they are the same length, it only needs to be aligned according to a predetermined position during installation, and no misalignment occurs due to a length problem. It is also convenient in later maintenance, since all the connecting portions 1211 and the connecting lengths are equivalent, and it is not easy to disregard any part during inspecting and repairing.

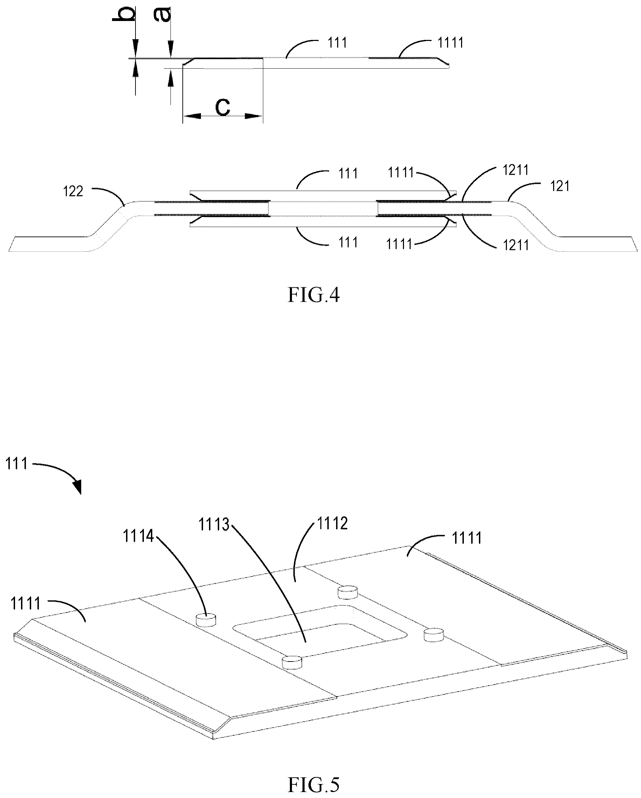

In some embodiments, the extending length of the coupling portion 1111 in the extending direction of the conductive plate 111 is at least 3 times a sum of the thicknesses of the body 1112 and the coupling portion 1111. For example, as shown in FIG. 4, *a* is a thickness of the body 1112 coupled to the coupling portion 1111 *b* is a thickness of the coupling portion 1111, *c* is an extending length, therefore *c* ≥ 3(*a + b*) *.* In embodiments of the present disclosure, the extending length of the coupling portion 1111 may also be 6 or 7 times the sum of the thicknesses of the body 1112 and the coupling portion 1111, which is not specifically limited thereto.

Specifically, this arrangement may ensure sufficient contact area between the coupling portion 1111 and the busbar, thereby effectively reducing contact impedance and improving conductive property. Since the conductive efficiency and stability of current transmission tend to be directly related to the contact area. The larger contact area can reduce heat build-up while also reducing contact resistance and energy loss.

In addition, the length of the coupling portion 1111 is at least 3 times the thickness of the body 1112 and the coupling portion 1111, which also provides more safety fault-tolerant space for the coupling portion 1111. For example, if there is a busbar displacement or minor deformation, this length is sufficient to ensure the tight contact between the coupling portion 1111 and the busbar, reducing potential safety hazard caused by poor contact thereof.

In addition, a longer bonding length between the coupling portion 1111 and the connecting portion also helps to enhance the stability and durability of the structure of the conductive plate 111. Since the length of the coupling portion 1111 is large, it can bear the pressure more effectively and reduce the damage to the coupling portion 1111 or the body 1112 by dispersing the pressure.

In general, the extending length of the coupling portion 1111 in the extending direction of the conductive plate 111 is at least 3 times the sum of the thicknesses of the body 1112 and the coupling portion 1111, so that the requirements of conductive property, safety and stability can be fully balanced, and meanwhile the performance and safety of the whole power facility can be improved.

In some embodiments, the thickness of the coupling portion 1111 is kept in a range not greater than the thickness of the body 1112 where the coupling portion 1111 is arranged, thereby helping to improve the performance of the conductive plate 111, increase the stability of the busbar connection assembly 110, and reduce maintenance cost.

In some embodiments, the conductive plate 111 is arranged to protrude from the body 1112 from a periphery proximate to the positioning hole 1113. A limiting block 1114 is configured to align positions of the connecting portion 1211 and the coupling portion 1111 after the busbar is inserted into the pair of conductive plates 111.

Specifically, the limiting block 1114 can help the busbar to find the correct path and alignment point. When the busbar needs to be inserted into the conductive plate 111, the limiting block 1114 can prevent the busbar from being inserted too deep or skewed to ensure accurate alignment of the connecting portion 1211 and the coupling portion 1111. The conductive plate 111 can be accurately engaged according to the guiding of the shape of the limiting block 1114 by simply moving the busbar toward the limiting block 1114.

In addition, the limiting block 1114 also has a protection function. In actual operation, the busbar may apply excessive force during insertion into the conductive plate 111, which may cause damage or deformation to the connecting portion 1211 and the coupling portion 1111. However, by means of the limiting block 1114, the occurrence of this situation can be effectively prevented, and it can bear the inserted pressure and protect the connecting portion 1211 and the coupling portion 1111 from damage.

In addition, the limiting block 1114 also helps maintain the stability of the connection. After the busbar is inserted into the conductive plate 111, by aligning connecting portion 1211 and the coupling portion 1111, the position can be effectively locked, and the connection is prevented from being unstable due to movement or vibration of the busbar during power transmission, thereby ensuring the stability and safety of power transmission.

Therefore, the limiting block 1114 in the conductive plate 111 may enable the busbar to accurately and stably insert into the conductive plate 111, thereby effectively improving the performance of the busbar connection assembly 110.

In some embodiments, ends of the pair of conductive plates 111 in the extending direction are chamfered, so that the convenience of using and connecting the conductive plate 111 can be improved, the safety of the conductive plate 111 can be enhanced, and the service life of the conductive plate 111 can be prolonged.

Since a chamfer is usually used in engineering to process an edge of an object, the edge is smoothly transitioned from one face to another, which avoids forming a sharp edge. Specifically, through the chamfers at the ends of the pair of conductive plates 111 in the extending direction, it is possible to make the conductive plate 111 smoother during a docking process, and reduce phenomenon of hard insertion and jamming caused by sharp ends. This not only avoids possible damage to the interface during a process of plugging and unplugging, but also makes an action of plugging and unplugging easier, and improves the use experience.

At the same time, the edge of the chamfer also significantly improves the safety in use. The sharp edge can easily scrape the user or other equipment during use, and the arrangement of the chamfer can eliminate such problems to a great extent and ensure the safety of users and equipment.

In addition, the chamfer also helps to enhance the durability of the conductive plate 111. Since the chamfer at the interface can smoothly disperse the stress distribution, the stress is not excessively concentrated at one point, so that the wear resistance of the conductive plate 111 is remarkably improved, and the service life of the conductive plate 111 is prolonged.

In some embodiments, the busbar box assembly further includes an insulating separator 113. The insulating separator 113 is arranged at least between the conductive plates 111 of the busbar connection assemblies 110 of a plurality of busbar assemblies, i.e., between a pair of conductive plates 111 and the other pair of conductive plates 111.

The insulating separator 113 is usually made of a material with high insulation strength, such as porcelain, glass, special plastic or Bulk Molding Compound (abbreviated BMC). It can be used for electrical isolation in electrical equipment to prevent electrical equipment from arcing or surges, thereby guaranteeing the safety of electrical equipment and personnel.

In the busbar box assembly, the insulating separator 113 is arranged at least between the conductive plates 111 of the busbar connection assemblies 110 of the plurality of busbar assemblies. In actual operation, during the connection of the busbar assembly through the busbar connection assembly 110, the insulating separator 113 is installed between the conductive plates 111 of the connection assembly, thereby achieving physical isolation between the busbars and preventing direct jump of current.

In this configuration, the insulating separator 113 can not only provide a protective barrier, but also avoid a short circuit between the busbars, thereby helping to maintain independence of each busbar, so that the current can be correctly guided on a specified path.

In summary, in practical applications, the contact resistance of the contact region between the busbar box assembly and the busbar connection assembly 110 in embodiments of the present disclosure can be reduced by 60%, the temperature rise can be reduced by 10K, and the cost of the conductor material can be saved by 40%.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A busbar connection assembly for connecting busbars, comprising:
a pair of conductive plates (111) adapted to clamp and connect a first busbar (121) and a second busbar (122) separated from each other and extending in a same extending direction, each of the pair of conductive plates (111) comprising:
a body (1112) arranged to overlap a connecting portion (1211) located at ends of the first busbar (121) and the second busbar (122) adjacent to each other;
a pair of coupling portions (1111) arranged at least at ends of the body (1112) in an extending direction, the pair of coupling portions (1111) being respectively coupled to the body (1112) through solid-liquid coupling or solid-solid coupling by using a same material as surfaces of the connecting portions (1211) of the first busbar (121) and the second busbar (122); and
a positioning hole (1113) formed on the body (1112) and located in a middle portion of the body (1112) in the extending direction; and
a locking member (112) coupled in the positioning hole (1113) to lock and electrically connect the first busbar (121) and the second busbar (122) by pressing the pair of coupling portions (1111) respectively to the surfaces of the connecting portions (1211) of the first busbar (121) and the second busbar (122).

2. The busbar connection assembly of claim 1, **characterized in that** an extending length of each of the pair of the coupling portions (1111) in the extending direction is equal to a length of the connecting portion (1211) of the first busbar (121) or the second busbar (122) in the extending direction.

3. The busbar connection assembly of claim 2, **characterized in that** the extending length of the coupling portion (1111) in the extending direction of the conductive plate (111) is at least 3 times a sum of thicknesses of the body (1112) and the coupling portion (1111).

4. The busbar connection assembly of any one of claims 1 to 3, **characterized in that**
a thickness of the coupling portion (1111) is not greater than a thickness of the body (1112).

5. The busbar connection assembly of any one of claims 1-3, **characterized in that** the conductive plate (111) further comprises:
a plurality of limiting blocks (1114) arranged to protrude from the body (1112) from a periphery proximate to the positioning hole (1113).

6. The busbar connection assembly of any one of claims 1 to 3, **characterized in that**
ends of the pair of conductive plates (111) in the extending direction are chamfered.

7. A busbar assembly, comprising:
the busbar connection assembly of any one of claims 1 to 6; and
a busbar group at least comprising a first busbar (121) and a second busbar (122) extending in a same extending direction, the first busbar (121) and the second busbar (122) each comprising a connecting portion (1211) and a power transmission portion for power transmission, and the connecting portion (1211) being formed at ends of the power transmission portions of the first busbar (121) and the second busbar (122) close to each other,
wherein the connecting portion (1211) is adapted to be clamped between the coupling portions (1111) of the conductive plates (111) of the busbar connection assembly to establish an electrical connection between the first busbar (121) and the second busbar (122).

8. The busbar assembly of claim 7, **characterized in that** the connecting portion (1211) is integrally formed at ends of the power transmission portions of the first busbar (121) and the second busbar (122) close to each other by solid-liquid coupling or solid-solid coupling.

9. The busbar assembly of claim 7, **characterized in that** a length of the connecting portion (1211) in the extending direction is equal to an extending length of the coupling portion (1111) in the extending direction.

10. The busbar assembly of any one of claims 7 to 9, **characterized in that** the connecting portion (1211) is arranged on an entire side of the first busbar (121) or the second busbar (122) close to the conductive plate (111) to electrically couple the conductive plate (111).

11. A busbar box assembly, comprising:
a busbar box (120); and
a plurality of busbar assemblies of any one of claims 7 to 10 arranged in the busbar box (120).

12. The busbar box assembly of claim 11, **characterized by** further comprising:
an insulating separator (113) arranged at least between the conductive plates (111) of busbar connection assemblies of the plurality of busbar assemblies.
